# DEMANDE DE BREVET EUROPEEN

(11) **EP 0 521 801 A1**
(43) Date de publication de la demande: **07.01.1993**
(21) Numéro de dépôt: 92401937.5
(22) Date de dépôt: 06.07.1992
(51) Int. Cl.: F24C 15/04

(54) **Hublot pour appareil de cuisson et porte de four équipée d'un tel hublot**

(30) Priorité: 05.07.1991 FR 9108453
(71) Demandeur: COMPAGNIE EUROPEENNE POUR L'EQUIPEMENT MENAGER "CEPEM", F-45140 St Jean-de-la-Ruelle (FR)
(72) Inventeur: Dubois, Hervé, Thomson-CSF, F-92045 Paris la Défense (FR)
(74) Mandataire: Desperrier, Jean-Louis

(57) **Abrégé**

Le hublot (14) pour appareil de cuisson comporte une plaque transparente (18) et un cadre de montage (20) surmoulé à la périphérie de la plaque (18). Le cadre (20) est réalisé en matériau thermoplastique ou thermodurcissable. Il comporte des moyens d'attache sur la paroi (10) de l'appareil tels que des méplats de collage (32), des bossages pour vis ou des pattes d'ancrage.

L'invention concerne également des portes de four à usage domestique équipées de hublots décrits ci-dessus.

## Description

La présente invention concerne des hublots pour appareils de cuisson tels que les fours et cuisinières à usage domestique.

Il est connu d'équiper les portes de four de hublots constitués d'une plaque de verre ou de matériau transparent analogue. Dans la technique antérieure, les plaques sont montées sur les parois en tôle des portes (par exemple par l'intermédiaire de pattes métalliques vissées ou soudées sur ces parois).

L'invention a pour objet d'apporter des améliorations à la technique antérieure, notamment au niveau du montage du hublot sur la porte.

Plus particulièrement, l'invention propose un hublot pour appareil de cuisson pourvu d'une plaque en matière transparente, caractérisé en ce qu'il comporte un cadre de montage surmoulé sur la périphérie de la plaque.

Selon un premier mode de réalisation de l'invention, le cadre est réalisé en matériau thermodurcissable de préférence choisi parmi les polyesters, les vinyl esters et les matériaux composites notamment les composites de type BMC (également dénommés "Bulk Moulded Compounds").

Selon un autre mode de réalisation de l'invention, le cadre est réalisé en matériau thermoplastique de préférence choisi parmi les polypropylènes, les polyamides, les polytéréphtalates d'éthylène (PET) ou de butylène (PBT).

D'une façon générale, on préfère les thermodurcissables lorsque l'on veut privilégier la résistance à la température. Il est à noter que la réglementation à venir devrait imposer des échauffements en partie externe des parois de four inférieurs à 100°K pour les matériaux plastiques et 80°K pour le verre.

Selon un autre mode de réalisation de l'invention, le cadre comporte une bordure externe s'étendant sensiblement parallèlement à la plaque transparente et pourvue de parties d'attache telles que bossages filetés, méplats de collage ou pattes d'ancrage venues de matière avec le cadre. Avantageusement, la bordure présente un épaulement périphérique rentrant vers le côté interne de la plaque transparente.

L'invention concerne également une porte de four ou de cuisinière à usage domestique équipée d'un hublot selon une des variantes présentées ci-dessus.

D'autres avantages et caractéristiques de l'invention apparaîtront à la lecture de la description qui va suivre en référence aux dessins ci-annexés dans lesquels:
- la figure 1 représente une vue partielle en coupe d'une porte de four équipée d'un hublot selon une première variante de l'invention;
- la figure 2 représente une vue partielle en coupe d'une porte de four équipée d'un hublot selon une seconde variante de l'invention;
- et la figure 3 représente une vue partielle en coupe d'une porte de four équipée d'un hublot selon une troisième variante de l'invention.

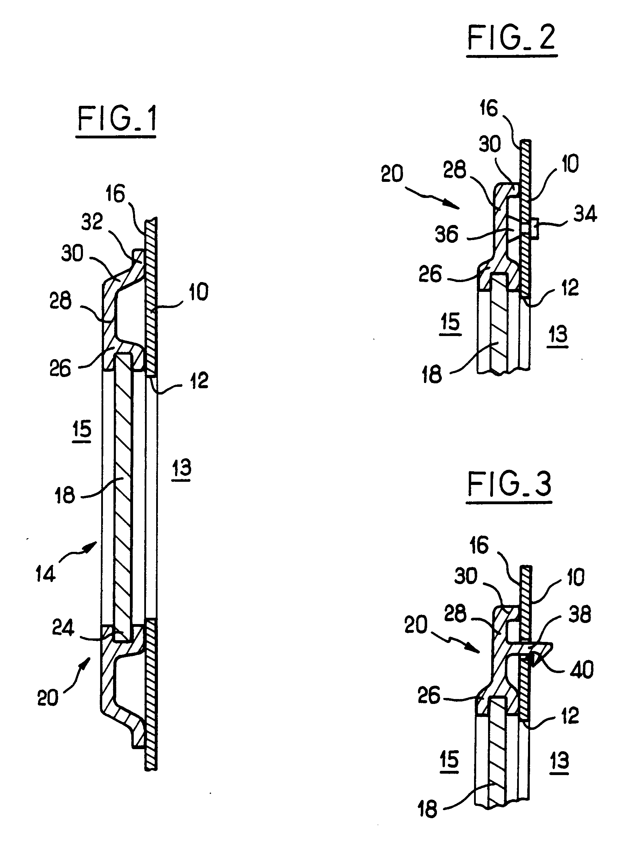

Si l'on considère la figure 1, le panneau d'un appareil de cuisson, par exemple la porte d'un four à usage domestique, est schématisé par sa paroi externe en tôle 10 dans laquelle a été pratiquée une ouverture 12 (à titre d'exemple non limitatif de forme rectangulaire). L'ouverture 12 est fermée par un hublot 14 monté sur la face externe 16 de la paroi 10 (c'est-à-dire la face extérieure à l'enceinte du four 13). Selon l'invention, le hublot 14 est composé d'une plaque en matière transparente 18 d'environ 4 à 5 mm de verre ou de matériau plastique tel le polycarbonate et d'un cadre de montage 20 surmoulé sur la périphérie 24 de la plaque 18 sur tout le pourtour de cette dernière. Bien entendu, sans sortir du cadre de l'invention, le panneau de l'appareil de cuisson peut être mobile (porte) ou fixe.

Le cadre 20 comporte une portion interne 26 en forme de U enserrant la plaque 18 venue de matière avec une bordure externe 28 s'étendant sensiblement parallèlement à la plaque transparente 18 et pourvue d'un épaulement périphérique 30 rentrant vers le côté interne de cette plaque c'est-à-dire vers la face externe 16 de la paroi 10. L'épaulement 30 se termine par un méplat 32 solidarisé par collage à la face 16 et assurant par là-même le montage du hublot 14 sur la porte de four 10.

Le cadre 20 est réalisé par surmoulage soit en matériau thermodurcissable choisi en particulier parmi les polyesters, les vinyl esters, les matériaux composites notamment de type BMC (à base de fibres de verre et de résines polyesters) soit en matériau thermoplastique choisi en particulier parmi les polypropylènes, les polyamides et les polytéréphtalates d'éthylène (PET) ou de butylène (PBT).

Bien entendu les matériaux utilisés doivent supporter en mode de cuisson des températures correspondantes à des échauffements en partie extérieure de façade du four de l'ordre de 100°K ou 80°K suivant les matériaux. Selon les matériaux utilisés, le cadre a une épaisseur comprise entre 3 et 5 mm.

Les cadres de montage de hublot selon l'invention sont réalisés par surmoulage soit par la méthode dite d'injection soit par la méthode dite de transfert.

Bien entendu l'invention n'est pas limitée au mode de réalisation présenté à titre d'exemple non limitatif en référence à la figure 1. Les figures 2 et 3 illustrent deux autres variantes de l'invention (également présentées à titre d'exemple non limitatif), notamment au niveau du montage du hublot sur la paroi de la porte du four. Par convention, les éléments identiques aux trois modes de réalisation de l'invention porteront les mêmes références numériques et ne seront pas décrits à nouveau.

Si l'on considère la figure 2, on peut remarquer que la bordure 28 du cadre 20 est centrée sur la portion en U 26. La fixation du hublot est obtenue par vissage de vis 34 traversant la paroi 10 pour se loger dans des bossages 36 pourvus chacun d'un filetage interne. Les bossages 36 sont venus de matière avec le cadre et répartis régulièrement autour de la plaque transparente 18. Une fois le montage réalisé, l'épaulement 30 vient en butée contre la face 16 de la paroi 10.

Si l'on considère la figure 3, les moyens d'attache du hublot venus de matière avec le cadre 20 sont constitués par des pattes d'ancrage 38 dont les extrémités crantées sont montées par encliquetage de façon anti-retour au travers de perçages 40 prévus dans la paroi 10. Comme pour les bossages 36, les pattes d'ancrage 38 sont réparties régulièrement autour de la plaque transparente 18.

## Revendications

1. Hublot pour appareil de cuisson pourvu d'une plaque en matière transparente (18), caractérisé en ce qu'il comporte un cadre de montage (20) surmoulé sur la périphérie (24) de la plaque (18).

2. Hublot selon la revendication 1, caractérisé en ce que le cadre (20) est réalisé en matériau thermodurcissable, de préférence choisi parmi les polyesters, les vinyl esters et les matériaux composites notamment les composites de type BMC.

3. Hublot selon la revendication 1, caractérisé en ce que le cadre (20) est réalisé en matériau thermoplastique, de préférence choisi parmi les polypropylènes, les polyamides, les polytéréphtalates d'éthylène (PET) ou de butylène (PBT).

4. Hublot selon l'une des revendications précédentes, caractérisé en ce que le cadre comporte une bordure externe (28), s'étendant sensiblement parallèlement à la plaque transparente et pourvue de parties d'attache telles que bossages filetés (36), méplats de collage (32) ou pattes d'ancrage (38) venues de matière avec le cadre (20).

5. Hublot selon la revendication 4, caractérisé en ce que la bordure (28) présente un épaulement périphérique (30) rentrant vers le côté interne de la plaque transparente (18).

6. Porte de four ou de cuisinière à usage domestique, caractérisée en ce qu'elle est équipée d'un hublot selon l'une des revendications précédentes.
